# EUROPEAN PATENT SPECIFICATION

(11) **EP 2 843 509 B1**
(45) Date of publication and mention of the grant of the patent: **03.11.2021**
(21) Application number: 14002910.9
(22) Date of filing: 22.08.2014
(51) Int. Cl.: G06F 3/01, G06F 3/03

(54) **Electronic device having proximity touch function**
Elektronische Vorrichtung mit Näherungsberührungsfunktion
Dispositif électronique ayant une fonction tactile de proximité

(30) Priority: 27.08.2013 KR 20130101514
(43) Date of publication of application: 04.03.2015
(73) Proprietor: LG Electronics, Inc., Seoul 150-721 (KR)
(72) Inventor: Cho, Youngjun, Seoul 137-724 (KR); Joung, Munchae, Seoul 137-724 (KR); Kim, Sunuk, Seoul 137-724 (KR)
(74) Representative: Beyer, Andreas

(56) References cited:
- US-A1- 2008 006 762
- US-A1- 2008 122 803
- US-A1- 2011 310 005
- US-A1- 2012 032 923
- WELCH G ET AL: "Motion tracking: no silver bullet, but a respectable arsenal", IEEE COMPUTER GRAPHICS AND APPLICATIONS, IEEE SERVICE CENTER, NEW YORK, NY, US, vol. 20, no. 6, 1 November 2002 (2002-11-01), pages 24-38, XP011201226, ISSN: 0272-1716
- None

## Description

### CROSS-REFERENCE TO RELATED APPLICATION

This application claims the priority benefit of Korean Patent Application No. 10-2013-0101514, filed on August 27, 2013 in the Korean Intellectual Property Office.

### FIELD

The present invention relates to an electronic device having a proximity touch function to sense proximity touch of a pointer .

### BACKGROUND

In accordance with recent development of touch recognition technologies and three-dimensional display technologies, research into technology to allow a user to three-dimensionally access an electronic device, namely, three-dimensional (3D) interaction, is being actively conducted.

Such 3D interaction utilizes, as a kernel technology thereof, a space recognition technology to enable an existing touch screen not only to sense X-Y-axis input through touch input, but also to sense Z-axis input through touch input.

To this end, for realization of space recognition technology, conventional electronic devices are equipped with a small or medium-sized camera.

That is, a proximity touch function is realized by photographing a figure of a pointer, using a camera, and estimating a position of the pointer based on the photographed image.

Document US 2011/310005 A1 may be construed to disclose systems and methods for performing contactless gesture recognition for a computing device, such as a mobile computing device. A technique for managing a gesture-based input mechanism for a computing device includes identifying parameters of the computing device relating to accuracy of gesture classification performed by the gesture-based input mechanism and managing a power consumption level of at least an infrared (IR) light emitting diode (LED) or an IR proximity sensor of the gesture-based input mechanism based on the parameters of the computing device.

Document US 2012/032923 A1 may be construed to disclose an IR controlling device including a display panel, a number of IR emitters, a number of IR receivers, and a receiving controller. The IR emitters and the IR receivers are staggered under the display panel, and facing the display panel. The IR emitters are to emit IR beams in sequence, and the IR receivers are to receive the IR beams reflected by an external object. The receiving controller generates a plurality of response signals corresponding to the IR receivers. An IR processing unit receives the response signals, and determines a virtual position of the external object on the display panel. A controlling unit outputs a control signal and executes a corresponding function. A display processing unit receives the control signal and updates the content on the display panel.

### SUMMARY

According to the invention, there are provided an apparatus according to the independent claim. Developments are set forth in the dependent claims.

### BRIEF DESCRIPTION OF THE DRAWINGS

FIG. 1 illustrates a proximity touch function of an example electronic device.
FIG. 2 is a plan view of optical sensor modules included in an example electronic device.
FIG. 3 is a plan view of optical sensor modules included in an example electronic device.
FIGS. 4A and 4B illustrate an overall configuration of an example electronic device.
FIG. 5 is a sectional view illustrating distances of holes in an example noise remover.
FIGS. 6A to 6C are sectional views illustrating hole depths of an example noise remover.
FIGS. 7A to 7C are sectional views illustrating hole diameters of an example noise remover.
FIGS. 8A to 8C are sectional views illustrating inner surfaces of holes in an example noise remover.
FIG. 9 is a sectional view illustrating a reflector located on an inner surface of each hole of an example noise remover.
FIG. 10 illustrates an absorber and an optical filter located on an inner surface of each hole of an example noise remover.
FIG. 11 is a sectional view illustrating an air gap in each hole of an example noise remover.
FIG. 12 illustrates a diffusion material disposed in each hole of an example noise remover.
FIGS. 13A and 13B are sectional views illustrating convex and concave surfaces of an example cover.
FIG. 14 is a sectional view illustrating a position of an example optical filter.
FIGS. 15A and 15B illustrate an example optical filter having holes.
FIG. 16 is a schematic of an example motion recognition unit.
FIG. 17 is a block diagram of an example motion recognition unit.
FIG. 18 is a flowchart of a control method of an example electronic device.
FIG. 19 is a graph of an operation of an example optical sensor module.
FIG. 20 is a graph of an operation of example optical sensor modules.

### DETAILED DESCRIPTION

It can be appreciated by a person skilled in the art that implementations in this disclosure may also be applied to a fixed terminal such as a digital TV or a desktop computer, except that the configurations can be applied only to mobile terminals.

The following terms in the present disclosure can be construed based on the following criteria and other terms that are not explained herein can be construed according to the following purposes. First of all, it is understood that the concept 'coding' in the present disclosure can be construed as either encoding or decoding in some cases. Secondly, 'information' in this disclosure is the term that generally includes values, parameters, coefficients, elements and the like and the meaning thereof may be construed as being different in some cases, by which the present disclosure is non-limited. The term "unit" is used to represent a basic image unit for image processing or a particular portion of an image. If necessary, the term "unit" may be used interchangeably with the term "block", "partition", or "area". In addition, the term "unit" in this disclosure may be construed as a concept including all of a coding unit, a prediction unit, and a transformation unit.

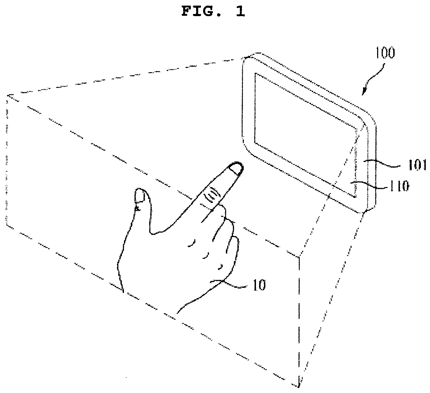

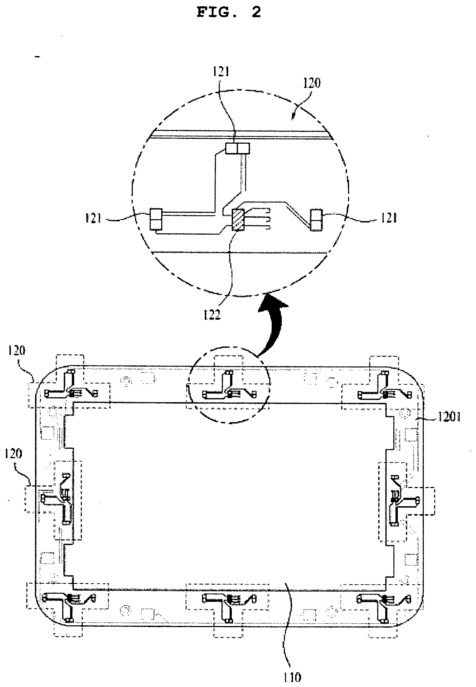

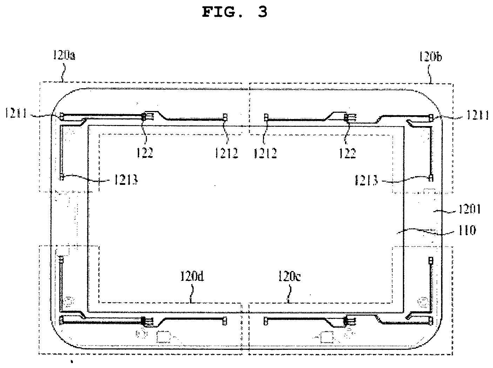

FIG. 1 illustrates a proximity touch function of an example electronic device. FIG. 2 is a plan view of optical sensor modules included in an example electronic device. FIG. 3 is a plan view of optical sensor modules included in an example electronic device.

The electronic device 100, which has a proximity touch function, may be a mobile terminal or a fixed terminal.

Here, the mobile terminal may include a cellular phone, a smart phone, a notebook (laptop) computer, a digital broadcast terminal, a personal digital assistant (PDA), a portable multimedia player (PMP), or a navigation terminal.

The fixed terminal may include a television (TV) or a navigation terminal.

In some implementations, as illustrated in FIGS. 1 and 2, the electronic device 100, which has a proximity touch function, may include a display unit 110, a bezel frame 1201, a plurality of optical sensor modules 120, and a motion recognition unit.

The display unit 110 displays (outputs) information processed in the electronic device 100.

For example, when the electronic device 100 is a navigation terminal, the electronic device 100 displays a user interface (UI) or a graphical user interface (GUI) for searching for a specified place.

As illustrated in FIG. 1, the display unit 110 may constitute a large portion of the front surface of the electronic device 100.

The display unit 110 may include at least one of a liquid crystal display (LCD), a thin film transistor LCD (TFT-LCD), an organic light emitting diode (OLED), a flexible display, and a three-dimensional (3D) display.

The bezel frame 1201 may be configured to surround the periphery of the display unit 110.

As illustrated in FIG. 2, the bezel frame 1201 may have a similar shape to the display unit 110.

Thus, the bezel frame 1201 is arranged to surround the periphery of the display unit 110. If necessary, the bezel frame 1201 may overlap a portion of the periphery of the display unit 110.

When the bezel frame 1201 is arranged in front of the display unit 110, an opening may be formed through a central portion of the bezel frame 1201, to expose the display unit 110.

The bezel frame 1201 may be one inner frame included in the electronic device 100.

For example, as illustrated in FIG. 1, the front appearance of the electronic device 100 may be defined by a front case 101. The bezel frame 1201 may be disposed inside the front case 101.

In some implementations, the bezel frame 1201 may be a portion of an LCD module constituting the display unit 110.

In this case, the bezel frame 1201 supports an LCD panel and a periphery of a backlight unit disposed beneath the LCD panel, and couples the LCD panel and backlight unit.

If necessary, the bezel frame 1201 may be integrated with a printed circuit board to drive the optical sensor modules 120, which will be described later, or may constitute a case defining the appearance of the electronic device 100.

The optical sensor modules 120 may be provided at the bezel frame 1201.

As illustrated in FIG. 2, the optical sensor modules 120 may be arranged along the periphery of the display unit 110, to form an optical sensor module array surrounding the display unit 110.

Each optical sensor module 120 emits light, and may detect an amount of reflected light when the emitted light is reflected from a pointer 10 spaced apart from the display unit 110.

As illustrated in FIG. 1, when the pointer 10, which is a hand of the user, is positioned in front of the display unit 110 within a region to which light from the optical sensor modules 120 is radiated, light emitted from the optical sensor modules 120 may be incident upon the optical sensor modules 120 after being reflected by the pointer 10.

Upon receiving reflected light, the optical sensor modules 120 may sense presence of the pointer 10 in front of the display unit 110, and may estimate the distance between the pointer 10 and the display unit 110, based on an amount of the reflected light.

The motion recognition unit may extract motion of the pointer 10, based on the amount of light detected by each optical sensor module 120, and may execute an operation corresponding to the extracted motion.

That is, when the optical sensor modules 120 sense proximity of the pointer 10 to the display unit 110, the motion recognition unit may analyze motion of the pointer 10, and may execute an operation predetermined in association with the motion.

In this case, the operation executed by the motion recognition unit may include an operation to change an output screen of the display unit 110, an operation to control sound output from the electronic device 100, an operation to turn on/off the electronic apparatus 100, or the like.

Such operations may be previously stored, respectively corresponding to specified motions. The motion recognition unit may search the stored motions for the extracted motion of the pointer 10, and may execute an operation corresponding to the searched motion.

Hardware implementations disclosed in this disclosure may be realized, using at least one of application specific integrated circuits (ASICs), digital signal processing devices (DSPDs), programmable logic devices (PLDs), field programmable gate arrays (FPGAs), processors, controllers, micro-controllers, microprocessors, and electrical units for execution of other functions.

In some cases, implementations disclosed in this disclosure may be realized by the motion recognition unit itself.

Software implementations such as procedures and functions disclosed in this disclosure may be realized, using separate software modules.

Each software module may execute one or more functions and operations disclosed in this disclosure.

Software code may be implemented using a software application written in an appropriate language. The software code may be stored in a memory, and may be executed by a controller.

Meanwhile, as illustrated in FIG. 2, each optical sensor module 120 includes a plurality of light emitters 121, and a light receiver 122.

In this case, the light emitters 121, each of which emits light, may constitute a light emitter array.

For example, each light emitter 121 may be a light emitting diode (LED) to emit infrared light.

The light emitters 121 may be mounted on a printed circuit board formed on the bezel frame 1201 and, as such, may emit light forwardly of the display unit 110 under control of the printed circuit board.

The radiation angle of light emitted from each light emitter 121 may be varied in accordance with the kind of the light emitter 121.

In this case, as the radiation angle increases, light emitted from each light emitter 121 may be irradiated over a wider region.

The light receiver 122 receives light reflected by a certain pointer, namely, the pointer 10, after being emitted from each light emitter 121, and converts an amount of reflected light into an electrical signal.

The light receiver 122 may include an infrared sensor, a photo diode, a photo transistor, or the like and, as such, may generate an electrical signal corresponding to an amount of received light.

The light receiver 122 may also be mounted on the printed circuit board formed on the bezel frame 1201. The light receiver 122 may be electrically connected to the motion recognition unit, to transmit an electrical signal to the motion recognition unit.

In some implementations, a plurality of light emitters 121 may correspond to one light receiver 122. The corresponding light receiver 122 and light emitters 121 may form one optical sensor module 120.

As described above, a plurality of optical sensor modules 120 may be provided at the bezel frame 1201.

It may be assumed that light received by a specified light receiver 122 is light reflected by a certain pointer, namely, the pointer 10, after being emitted from one of the light emitters 121 corresponding to the light receiver 122.

In some implementations, as illustrated in FIG. 2, the light emitters 121 included in each optical sensor module 120 on the bezel frame 1201 may be arranged to surround the corresponding light receiver 122.

In this case, the light emitters 121 are disposed to be spaced apart from the light receiver 122 by the same distance and, as such, light reflected after being emitted from all light receivers 121 may be effectively incident upon the light receiver 122.

In some implementations, as illustrated in FIG. 3, a plurality of light emitters 1211 to 1213 included in each optical sensor module, for example, an optical sensor module 120a, may be aligned with one another along the periphery of the display unit 110.

In addition, the light receiver 122 may also be aligned with the light emitters 1211 to 1213 along the periphery of the display unit 110.

In this case, the plurality of light emitters 1211 to 1213 and one light receiver 122 may be aligned with one another.

The light receiver 122 may be arranged between adjacent ones of the light emitters, or may be arranged outside an outermost one of the light emitters.

The light emitters 1211 to 1213 and light receiver 122 included in one optical sensor module, for example, the optical sensor module 120a, may be aligned with one another along a portion of the periphery of the display unit 110, and the light emitters 1211 to 1213 and light receiver 122 included in another optical sensor module, for example, an optical sensor module 120b, may be aligned with one another along another portion of the periphery of the display unit 110.

In this case, a plurality of optical sensor modules 120a to 120d each including a plurality of light emitters and one light receiver may be arranged in a continuous manner along the periphery of the display unit 110, to surround the display unit 110.

Since the light emitters and light receivers included in the plurality of optical sensor modules are aligned with one another, it may be possible to irradiate light over the entire region of the display unit and to sense reflected light, using a reduced number of optical sensor modules.

As a result, it may be possible to realize a proximity sensing function, using reduced numbers of light emitters and light receivers and, as such, a reduction in manufacturing costs may be achieved.

For example, as illustrated in FIG. 3, the display unit 110 and bezel frame 1201 may have a rectangular shape extending in a longitudinal direction and in a width direction. In addition, each optical sensor module, for example, the optical sensor module 120a, may include a first light emitter, namely, the light emitter 1211, disposed at one corner of the bezel frame 1201, a second light emitter, namely, the light emitter 1212, disposed to be spaced apart from the first light emitter 1211 in a longitudinal direction, and a third light emitter, namely, the light emitter 1213, disposed to be spaced apart from the first light emitter 1211 in a width direction.

In this case, the light receiver 122 included in each optical sensor module, for example, the optical sensor module 120a, may be disposed between the first light emitter 1211 and the second light emitter 1212.

In some implementations, the rectangular bezel frame 1201 may be divided into four local regions including respective corners, and one optical sensor module may be provided at each local region.

In this case, the optical sensor modules may be referred to as first, second, third, and fourth sensor modules 120a, 120b, 120c, and 120d, respectively.

When light emitted from a plurality of light emitters included in a specified one of the optical sensor modules is incident upon the light receiver of the specified optical sensor module after being reflected by a pointer, it may be determined that the pointer is disposed in front of the local region of the bezel frame where the specified optical sensor module is arranged.

That is, one optical sensor module is installed per local area of the bezel frame and, as such, when a pointer is sensed by a specified one of the optical sensor modules, it may be possible to match the position of the pointer with the position of the local region where the specified optical sensor module is installed.

Meanwhile, the number of light emitters included in each optical sensor module may be determined in accordance with a radiation angle of light emitted from each light emitter.

In order to enable light emitted from each light emitter to be incident upon the light receiver, the light emitter should be disposed near the light receiver.

In this case, the maximum distance between the light emitter and the light receiver enabling light emitted from the light emitter to be incident upon the light receiver may be increased as the radiation angle of light emitted from the light emitter increases.

That is, at an increased radiation angle of light emitted from each light emitter, even light emitted from the light emitter spaced farther from the light receiver than other light emitters may be incident upon the light receiver after being reflected.

For example, when a plurality of light emitters and one light receiver are aligned with one another, and the radiation angle of light emitted from each light emitter is great, even light emitted from the light emitter spaced farthest from the light receiver may be incident upon the light receiver after being reflected.

On the other hand, when the radiation angle of light emitted from each light emitter is small, light emitted only from the light emitters arranged near the light receiver may be incident upon the light receiver after being reflected.

That is, when the radiation angle of light emitted from each light emitter increases, the number of light emitters corresponding to one light receiver may be increased.

FIG. 3 illustrates an implementation in which three light emitters correspond to one light receiver 122. However, when the radiation angle of light emitted from each light emitter increases, four or five light emitters may correspond to one light receiver.

In this case, it may be possible to irradiate light onto the entire region of the display unit 110 and to sense reflected light, using a reduced number of light receivers 122.

When light emitters 121 are arranged around the light receiver 122 while being adjacent to the light receiver 122, the light receiver 122 may directly receive light from the light emitters adjacent thereto in addition to reception of light reflected from a pointer.

For this reason, it may be difficult for the light receiver 122 to accurately recognize motion of the pointer due to noise caused by light emitted from the light emitters 121 adjacent to the light receiver 122.

To this end, a noise remover may be disposed on the bezel frame 1201, on which the light emitters 121 and light receivers 122 are arranged, in order to remove noise.

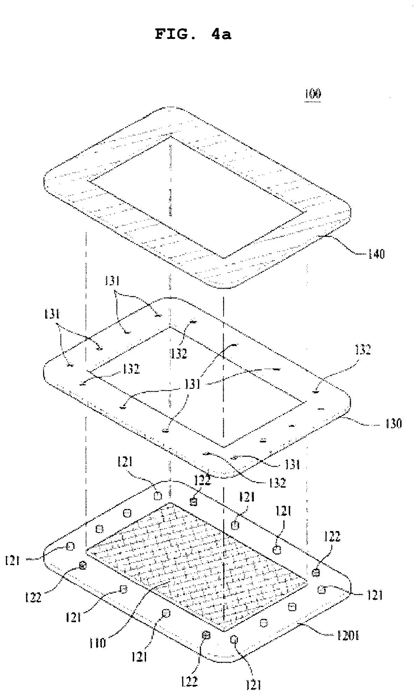

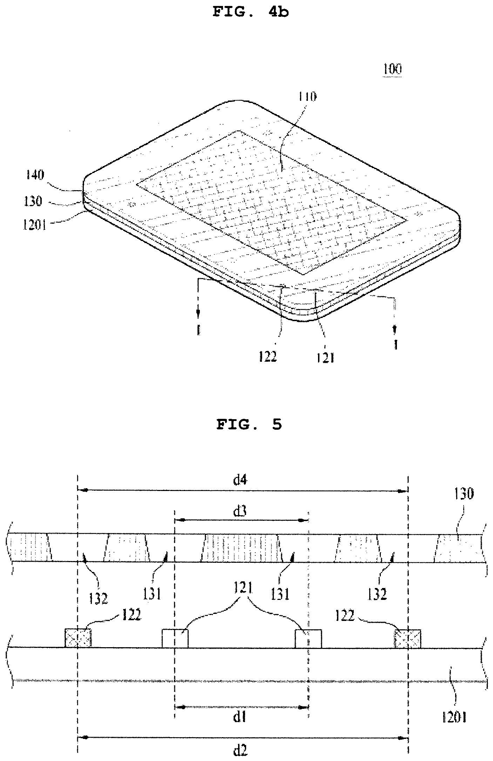

FIGS. 4A and 4B illustrate an overall configuration of an example electronic device. FIG. 4A is an exploded view, and FIG. 4B is an assembled view.

As illustrated in FIGS. 4A and 4B, the electronic device 100 may include a noise remover 130 and a cover 140, in addition to the display unit 110, bezel frame 1201, light emitters 121, and light receivers 122.

In this case, the bezel frame may be disposed to surround the periphery of the display unit 110.

A plurality of light emitters 121 may be disposed on the bezel frame 1201 while being spaced apart from one another by a first distance.

Meanwhile, a plurality of light receivers 122 may be disposed on the bezel frame 1201 while being spaced apart from one another by a second distance.

In this case, the first distance of the light emitters 121 may be smaller than the second distance of the light receivers 122.

Meanwhile, the number of light emitters 121 may be greater than the number of light receivers 122.

In some cases, the numbers of light emitters 121 and light receivers 122 may be equal.

The light receivers 122 may be disposed at corner regions of the bezel frame 1201.

In this case, the area capable of receiving light reflected from a pointer is increased.

Meanwhile, the noise remover 130 is disposed on the bezel frame 1201 while allowing the light emitters 121 and the light receivers 122 to be exposed.

In this case, the noise remover 130 may include a plurality of first holes 131 and a plurality of second holes 132.

The first holes 131 may be arranged to be spaced apart from one another by a third distance. The second holes 132 may be arranged to be spaced apart from one another by a fourth distance.

The light emitters 121 may be disposed in respective first holes 131, and the light receivers 122 may be disposed in respective second holes 132.

The third distance of the first holes 131 may be smaller than the fourth distance of the second holes 132.

In this case, the number of first holes 131 is greater than the number of second holes 132.

That is, the first holes 131 are arranged to correspond to the light emitters 121, and the second holes 132 may be arranged to correspond to the light receivers 122.

The depth of each first hole 131 may differ from that of each second hole 132. In some cases, the depth of each first hole 131 may be greater than that of each second hole 132.

In this case, it may be possible to prevent noise light from the light emitters 121 disposed in the first holes 131 from being incident upon the light receivers 122 when the depth of the first holes 131 is greater than the depth of the second holes 132, whereas the light receivers 122 disposed in the second holes 132 may easily receive light reflected from a pointer when the depth of the second holes 132 is smaller than the depth of the first holes 131.

In addition, each of the first holes 131 and second holes 132 may have a greater inner diameter at an upper portion thereof than at a lower portion thereof.

In accordance with this structure, light generated from the light emitters 121 disposed in the first holes 131 may be outwardly diffused, and the light receivers 122 disposed in the second holes 132 may easily receive light reflected from a pointer.

The inner diameter of the upper portion of each first hole 131 may be equal to that of the lower portion of the first hole 131. In some cases, the inner diameter of the upper portion of each first hole 131 may be smaller than that of the upper portion of each second hole 132.

In this case, it may be possible to prevent noise light from the light emitters 121 disposed in the first holes 131 from being incident upon the light receivers 122 when the inner diameter of the upper portion of each first hole 131 is smaller than that of the upper portion of each second hole 132, whereas the light receivers 122 disposed in the second holes 132 may easily receive light reflected from a pointer when the inner diameter of the upper portion of each second hole 132 is greater than that of the upper portion of each first hole 131.

The inner surface of each of the first and second holes 131 and 132 may be inclined at a predetermined angle with respect to the upper surface of the noise remover 130.

In some cases, the inner surface of each of the first and second holes 131 and 132 may have an upper portion inclined at a predetermined angle with respect to the upper surface of the noise remover 130, to form an inclined surface, and a lower portion perpendicular to the lower surface of the noise remover 130, to form a vertical surface.

In accordance with this structure, light generated from the light emitters 121 disposed in the first holes 131 may be outwardly diffused, and the light receivers 122 disposed in the second holes 132 may easily receive light reflected from a pointer.

A reflector to reflect light may be disposed on at least one of the inner surfaces of the first and second holes 131 and 132.

In some cases, at least one of an absorber to absorb light and an optical filter to transmit light of a particular wavelength range may be disposed on at least one of the inner surfaces of the first and second holes 131 and 132.

The cover 140 is disposed on the noise remover 130. The cover 140 may be made of an optically transmissive material.

The cover 140 may cover the first and second holes 131 and 132 of the noise remover 130.

Air gaps may be formed between the cover 140 and each light emitter 121 and between the cover 140 and each light receiver 122, respectively.

In some cases, a light diffusion material may be filled between the cover 140 and each light emitter 121.

The light diffusion material may contain a plurality of beads to refract or reflect light.

The cover 140 covers the first and second holes 131 and 132 of the noise remover 130. The portion of the cover 140 facing each first hole 131 has a concave surface concaving in a direction away from the first hole 131. The portion of the cover 140 facing each second hole 132 has a convex surface convexing in a direction toward the second hole 132.

In some cases, an optical filer may be interposed between the cover 140 and the noise remover 130.

The optical filter may cover each second hole 132 of the noise remover 130.

The optical filter may have a plurality of third holes to expose respective first holes 131 of the noise remover 130.

In this case, the diameter of each third hole of the optical filter may be greater than the diameter of each first hole 131 of the noise remover 130.

In some implementations, the electronic device may further include a motion recognition unit. The motion recognition unit may detect an amount of light reflected from a pointer disposed in front of the display unit 110 while being spaced apart from the display unit 110, extracts motion of the pointer, based on the detected light amount, and executes an operation corresponding to the extracted motion.

The motion recognition unit may include a detector, a noise filter, a coordinate calculator, a motion extractor, and a controller.

The detector may detect, via each light receiver 122, an amount of light reflected from a pointer. The noise filter may remove noise light of a wavelength range other than a predetermined wavelength range, from the detected light amount.

The coordinate calculator may calculate X-coordinates, Y-coordinates, and Z-coordinates of the pointer, based on the noise-removed light amount. The motion extractor may extract motion of the pointer in accordance with the coordinates of the pointer.

The controller may control the detector, noise filter, coordinate calculator, and motion extractor, and may execute an operation corresponding to the extracted motion.

In some implementations, the noise remover 130 having the first holes 131 to receive respective light emitters 121 and the second holes 132 to receiver respective light receivers 122 is provided to diffuse light emitted from the light emitters 121 and to prevent noise light from being incident upon the light receivers 122 and, as such, it may be possible to provide a wide proximity touch area while minimizing noise.

Accordingly, it may be possible to accurately and precisely extract motion of a pointer even when the pointer motion is slight or is generated at a long range and, as such, an operation corresponding to the extracted motion may be accurately executed. Thus, an enhancement in reliability of the electronic device may be achieved.

FIG. 5 is a sectional view illustrating distances of holes in an example noise remover.

As illustrated in FIG. 5, a plurality of light emitters 121 is disposed on the bezel frame 1201, and may have a first distance d1 between central axes of adjacent ones thereof.

A plurality of light receivers 122 is also disposed on the bezel frame 1201, and may have a second distance d2 between central axes of adjacent ones thereof.

In this case, the first distance d1 of the light emitters 121 may be smaller than the second distance d2 of the light receivers 122.

The noise remover 130 is disposed on the bezel frame 1201, and may have first holes 131 to expose respective light emitters 121, and second holes 132 to expose respective light receivers 122.

In this case, the first holes 131 may have a third distance d3 between central axes of adjacent ones thereof. The second holes 132 may have a fourth distance d4 between central axes of adjacent ones thereof.

The third distance d3 of the first holes 131 may be smaller than the fourth distance d4 of the second holes 132.

That is, the first holes 131 may be arranged to correspond to respective light emitters 121, and the second holes 132 may be arranged to correspond to respective light receivers 122.

Accordingly, the first distance d1 between the central axes of the adjacent light emitters 121 may be equal to the third distance d3 between the central axes of the adjacent first holes 131.

In addition, the second distance d2 between the central axes of the adjacent light receivers 122 may be equal to the fourth distance d4 between the central axes of the adjacent second holes 132.

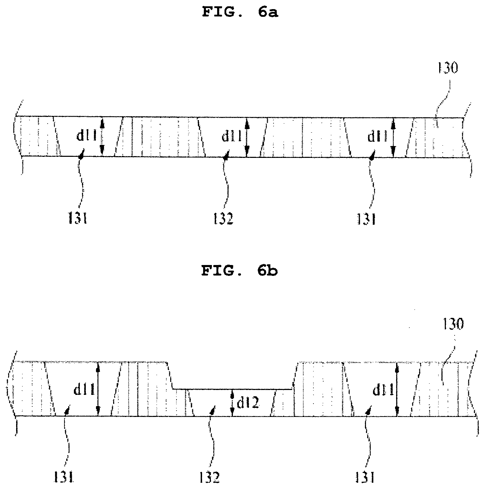

FIGS. 6A to 6C are sectional views illustrating hole depths of an example noise remover.

As illustrated in FIGS. 6A to 6C, the noise remover 130 may have first holes 131 to expose respective light emitters 121, and second holes 132 to expose respective light receivers 122.

In this case, the depth of each first hole 131 may be equal to the depth of each second hole 132. In some cases, the depth of each first hole 131 may be greater than the depth of each second hole 132.

For example, as illustrated in FIG. 6A, the depth d11 of the first holes 131 to expose respective light emitters 121 may be equal to the depth d12 of the second holes 132 to expose respective light receivers 122.

On the other hand, as illustrated in FIG. 6B, the depth d11 of the first holes 131 to expose respective light emitters 121 may differ from the depth d12 of the second holes 132 to expose respective light receivers 122.

For example, the depth d11 of the first holes 131 to expose respective light emitters may be greater than the depth d12 of the second holes 132 to expose respective light receivers.

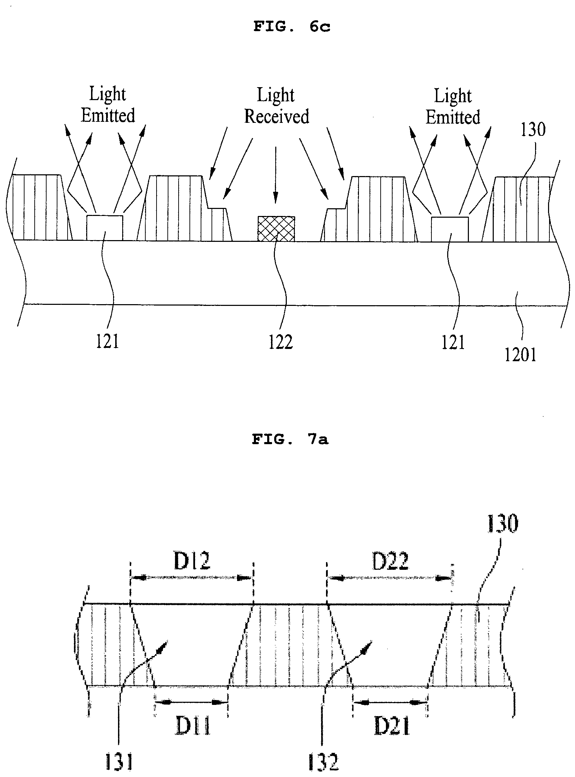

When the depth d11 of the first holes 131 is greater than the depth d12 of the second holes 132, as illustrated in FIG. 6C, it may be possible to prevent noise light from the light emitters 121 disposed in respective first holes 131 from being incident upon the light receivers 122 disposed in respective second holes 132.

In detail, since the light emitters 121 are disposed in respective first holes 131 having a great depth, light generated from each light emitter 121 is upwardly emitted without being emitted toward the light receiver 122 disposed adjacent to the light emitter 122. That is, noise light from the light emitters 121 is shielded by the noise remover 130.

On the other hand, when the depth d12 of the second holes 132 is smaller than the depth d11 of the first holes 131, as illustrated in FIG. 6C, the light receivers 122 disposed in respective second holes 132 may easily receive light reflected from a pointer.

Since the light receivers 122 are disposed in respective second holes 132 having a small depth, the area capable of receiving light reflected from a pointer is widened and, as such, it may be possible to accurately recognize motion of the pointer.

FIGS. 7A to 7C are sectional views illustrating hole diameters of an example noise remover.

As illustrated in FIGS. 7A to 7C, the noise remover 130 may have first holes 131 to expose respective light emitters 121, and second holes 132 to expose respective light receivers 122.

The inner diameter D12 of the upper portion of each first hole 131 may be greater than the inner diameter D11 of the lower portion of the first hole 131.

In addition, the inner diameter D22 of the upper portion of each second hole 132 may be greater than the inner diameter D11 of the lower portion of the second hole 132.

In this case, it may be possible to easily outwardly diffuse light generated from the light emitters 121 disposed in respective first holes 131, and to allow the light receivers 122 disposed in respective second holes 132 to easily receive light reflected from a pointer.

The diameter D12 of the upper portion of each first hole 131 may be equal to the inner diameter D22 of the upper portion of each second hole 132. In some cases, however, the diameter D12 of the upper portion of each first hole 131 may be smaller than the inner diameter D22 of the upper portion of each second hole 132.

For example, as illustrated in FIG. 7A, the diameter D12 of the upper portion of each first hole 131 to expose the corresponding light emitter 121 may be equal to the inner diameter D22 of the upper portion of each second hole 132 to expose the corresponding light receiver 122.

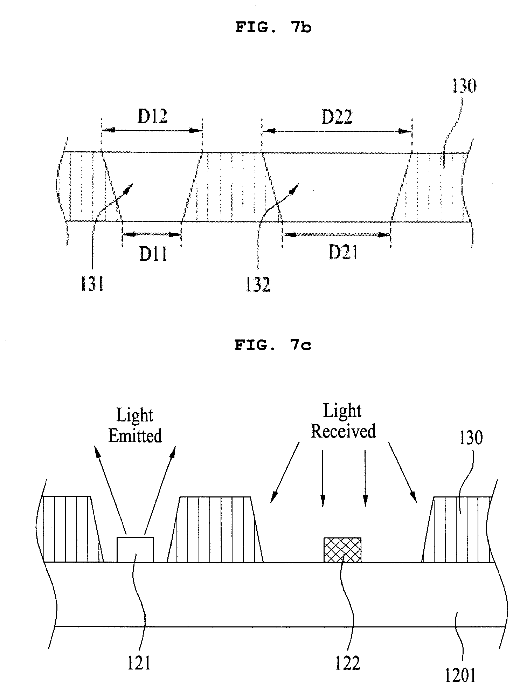

Alternatively, as illustrated in FIG. 7B, the diameter D12 of the upper portion of each first hole 131 to expose the corresponding light emitter 121 may differ from the inner diameter D22 of the upper portion of each second hole 132 to expose the corresponding light receiver 122.

For example, the diameter D12 of the upper portion of each first hole 131 to expose the corresponding light emitter 121 may be smaller than the inner diameter D22 of the upper portion of each second hole 132 to expose the corresponding light receiver 122.

When the diameter D12 of the upper portion of each first hole 131 is smaller than the inner diameter D22 of the upper portion of each second hole 132, as illustrated in FIG. 7C, it may be possible to prevent noise light from the light emitters 121 disposed in respective first holes 131 from being incident upon the light receivers 122.

In detail, since the light emitters 121 are disposed in respective first holes 131 having a small diameter, light generated from each light emitter 121 is upwardly emitted without being emitted toward the light receiver 122 disposed adjacent to the light emitter 122. That is, noise light from the light emitters 121 is shielded by the noise remover 130.

On the other hand, when the inner diameter D22 of the upper portion of each second hole 132 is greater than the diameter D12 of the upper portion of each first hole 131, as illustrated in FIG. 7C, the light receivers 122 disposed in respective second holes 132 may easily receive light reflected from a pointer.

Since the light receivers 122 are disposed in respective second holes 132 having a great diameter, the area capable of receiving light reflected from a pointer is widened and, as such, it may be possible to accurately recognize motion of the pointer.

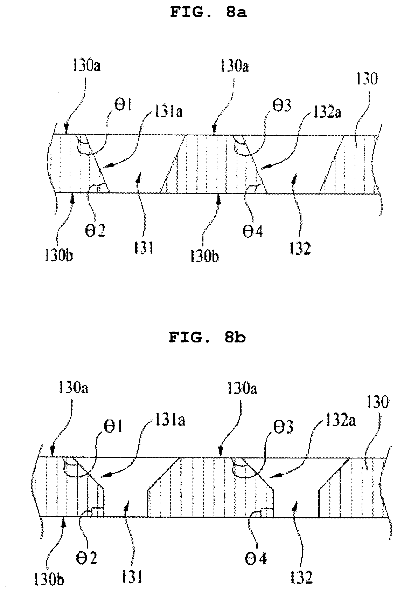

FIGS. 8A to 8C are sectional views illustrating inner surfaces of holes in an example noise remover.

As illustrated in FIGS. 8A to 8C, the noise remover 130 may have first holes 131 to expose respective light emitters 121, and second holes 132 to expose respective light receivers 122.

The inner surface of each first hole 131, namely, an inner surface 131a, may be a surface inclined at a predetermined angle θ1 with respect to an upper surface 130a of the noise remover 130.

In addition, the inner surface of each second hole 132, namely, an inner surface 132a, may be a surface inclined at a predetermined angle θ3 with respect to the upper surface 130a of the noise remover 130.

In this case, it may be possible to easily outwardly diffuse light generated from the light emitters 121 disposed in respective first holes 131, and to allow the light receivers 122 disposed in respective second holes 132 to easily receive light reflected from a pointer.

For example, the inner surface 131a of each first hole 131 may be inclined at the predetermined angle θ1 with respect to the upper surface 130a of the noise remover 130 while being inclined at a predetermined angle θ2 with respect to a lower surface 130b of the noise remover 130.

In addition, the inner surface 132a of each second hole 132 may be inclined at the predetermined angle θ3 with respect to the upper surface 130a of the noise remover 130 while being inclined at a predetermined angle θ4 with respect to the lower surface 130b of the noise remover 130.

In this case, θ1 and θ3 may be obtuse angles, respectively, and θ2 and θ4 may be acute angles, respectively.

In some cases, the inner surface 131a of each first hole 131 may have an upper portion inclined at a predetermined angle with respect to the upper surface 130a of the noise remover 130, to form an inclined surface, and a lower portion perpendicular to the lower surface 130b of the noise remover 130, to form a vertical surface.

In addition, the inner surface 132a of each second hole 132 may have an upper portion inclined at a predetermined angle with respect to the upper surface 130a of the noise remover 130, to form an inclined surface, and a lower portion perpendicular to the lower surface 130b of the noise remover 130, to form a vertical surface.

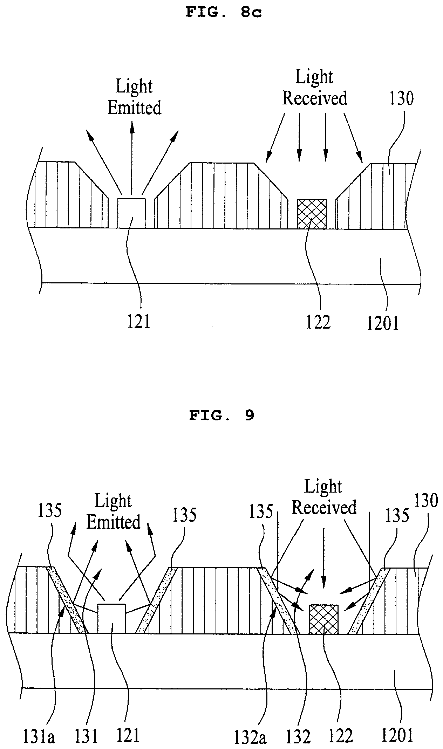

When the upper portion of the inner surface 131a of each first hole 131 is inclined at a predetermined angle with respect to the upper surface 130a of the noise remover 130, as illustrated in FIG. 8C, the light emitter 121 disposed in the first hole 131 may easily outwardly diffuse light generated therefrom and, as such, may secure a wide proximity touch area.

In addition, when the upper portion of the inner surface 132a of each second hole 132 is inclined at a predetermined angle with respect to the upper surface 130a of the noise remover 130, the light receiver 122 disposed in the second hole 132 may easily receive light reflected from a pointer within a wide area and, as such, it may be possible to accurately recognize motion of a pointer even when the pointer motion is slight.

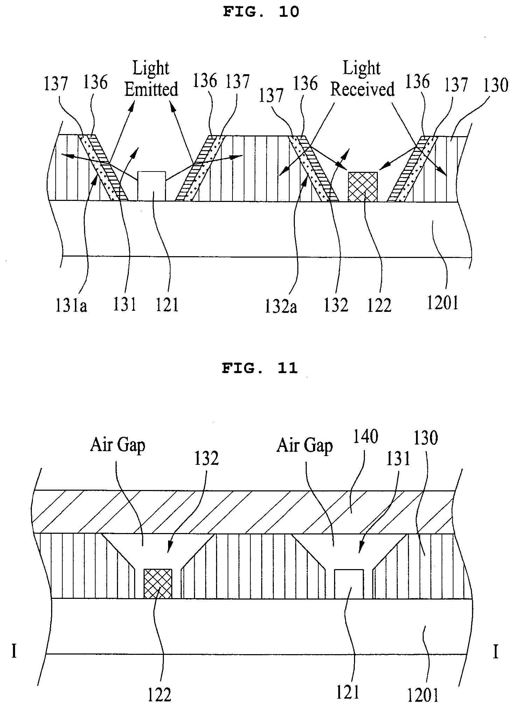

FIG. 9 is a sectional view illustrating a reflector located on an inner surface of each hole of an example noise remover. FIG. 10 illustrates an absorber and an optical filter located on an inner surface of each hole of an example noise remover.

As illustrated in FIGS. 9 and 10, the noise remover 130 may have first holes 131 to expose respective light emitters 121, and second holes 132 to expose respective light receivers 122.

A reflector 135 to reflect light may be disposed on at least one of the inner surfaces of the first and second holes 131 and 132.

In some cases, at least one of an absorber 137 to absorb light and an optical filter 136 to transmit light of a particular wavelength range may be disposed on at least one of the inner surfaces of the first and second holes 131 and 132.

For example, as illustrated in FIG. 9, reflectors 135 to reflect light may be disposed at the inner surface 131a of each first hole 131 and the inner surface 132a of each second hole 132, respectively.

In some cases, one reflector 135 may be disposed only at the inner surface 131a of each first hole 131. Alternatively, one reflector 135 may be disposed only at the inner surface 132a of each second hole 132.

When one reflector 135 is disposed only at the inner surface 131a of each first hole 131, light generated from the light emitter 121 disposed in the first hole 131 may be easily outwardly diffused without loss and, as such, it may be possible to secure a wide proximity touch area.

When one reflector 135 is disposed only at the inner surface 132a of each second hole 132, light incident upon the light receiver 122 disposed in the second hole 132 may be easily received by the light receiver 122 without loss and, as such, it may be possible to accurately recognize motion of pointer even when the pointer motion is slight.

Alternatively, as illustrated in FIG. 10, at least one of the absorber 137 to absorb light and the optical filter 136 to transmit light of a particular wavelength range may be disposed on the inner surface of each first hole 131, in place of the reflector 135.

In this case, it is possible to prevent noise light from the light emitter 121 from being incident upon the light receiver 122 disposed in the first hole 131.

That is, it may be possible to absorb noise light by the absorber 137, to shield noise light by the optical filter 136, or to shield and absorb noise light by the optical filter 136 and absorber 137.

The absorber 137 and optical filter 136 may be sequentially laminated over the inner surface 132a of each second hole 132, in place of the reflector 135.

In this case, the optical filter 136 may transmit light of a particular wavelength range, and the absorber 137 may absorb light transmitted through the optical filter 136.

When the absorber 137 and optical filter 136 are sequentially laminated over the inner surface 132a of each second hole 132, it is possible to prevent noise light from being incident upon the light receiver 122 disposed in the second hole 132.

That is, when noise light is outwardly incident upon the light receiver 122, the optical filter 136 transmits noise light. The transmitted noise light is then absorbed by the absorber 137 disposed beneath the optical filter 136. Accordingly, noise light may be removed.

Thus, it may be possible to accurately recognize motion of a pointer because the light receiver 122 may receive noise-removed light.

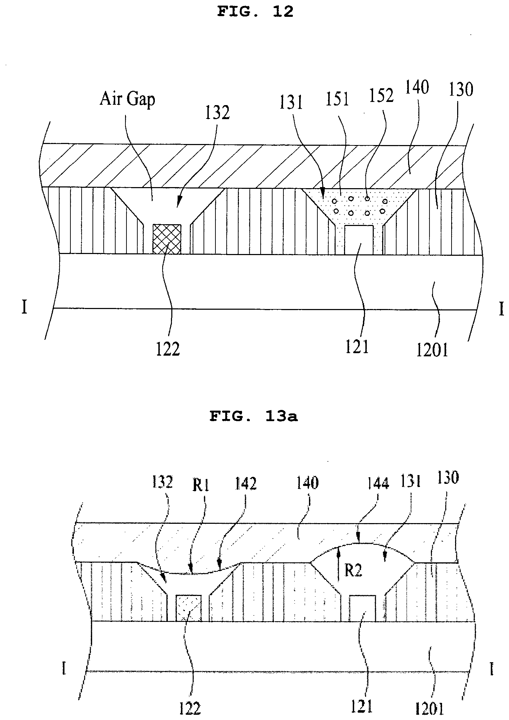

FIG. 11 is a sectional view illustrating an air gap in each hole of an example noise remover. FIG. 12 illustrates a diffusion material disposed in each hole of an example noise remover.

As illustrated in FIGS. 11 and 12, the noise remover 130 may have first holes 131 to expose respective light emitters 121, and second holes 132 to expose respective light receivers 122.

A cover 140 is disposed on the noise remover 130. The cover 140 is made of an optically transmissive material.

The cover 140 may cover the first and second holes 131 and 132 of the noise remover 130.

As illustrated in FIG. 11, air gaps may be formed between the cover 140 and each light emitter 121 and between the cover 140 and each light receiver 122, respectively.

When an air gap is formed between the cover 140 and each light emitter 121, light generated from the light emitter 121 may be outwardly emitted without loss.

When an air gap is formed between the cover 140 and each light receiver 122, light reflected from a pointer may be incident upon the light receiver 122 without loss.

In some cases, a light diffusion material 151 may be filled between the cover 140 and each light emitter 121, as illustrated in FIG. 12.

The light diffusion material 151 may contain a plurality of beads 152 to refract or reflect light.

In this case, light generated from the light emitter 121 may be reflected and refracted by the beads 152 of the optical diffusion material 151 and, as such, an increase in light diffusion angle may be achieved. Accordingly, it may be possible to secure a wide proximity touch area.

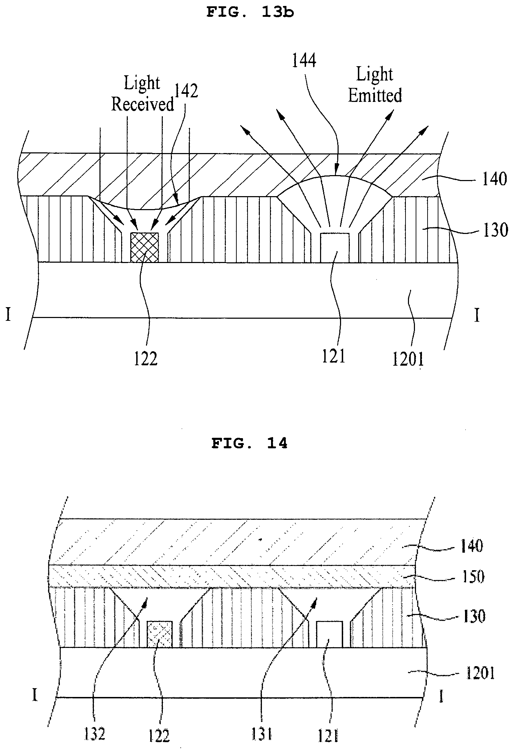

FIGS. 13A and 13B are sectional views illustrating convex and concave surfaces of an example cover.

As illustrated in FIGS. 13A and 13B, the noise remover 130 may have first holes 131 to expose respective light emitters 121, and second holes 132 to expose respective light receivers 122.

A cover 140 is disposed on the noise remover 130. The cover 140 is made of an optically transmissive material.

The cover 140 may cover the first and second holes 131 and 132 of the noise remover 130.

The portion of the cover 140 facing each first hole 131 has a concave surface 144 concaving in a direction away from the first hole 131.

The portion of the cover 140 facing each second hole 132 has a convex surface 142 convexing in a direction toward the second hole 132.

In this case, the concave surface 144 of the cover 140 facing the second hole 132 may have a second radius of curvature R2, whereas the convex surface 142 of the cover 140 facing the second hole 132 may have a first radius of curvature R1.

The first radius of curvature R1 and the second radius of curvature R2 may be equal. In some cases, the first radius of curvature R1 and the second radius of curvature R2 may be different.

When the portion of the cover 140 facing each first hole 131 has the concave surface 144, an increase in light diffusion angle may be achieved and, as such, it may be possible to secure a wide proximity touch area.

When the portion of the cover 140 facing each second hole 132 has the convex surface 142, light reflected from a pointer may be concentrated into the light receiver 122 and, as such, an increased amount of light may be received by the light receiver 122. Accordingly, it may be possible to accurately recognize motion of the pointer.

FIG. 14 is a sectional view illustrating a position of an example optical filter.

As illustrated in FIG. 14, the noise remover 130 may have first holes 131 to expose respective light emitters 121, and second holes 132 to expose respective light receivers 122.

The cover 140 is disposed on the noise remover 130. The cover 140 may cover the first and second holes 131 and 132 of the noise remover 130.

An optical filer 150 may be interposed between the cover 140 and the noise remover 130.

The optical filter 150 may cover the first and second holes 131 and 132 of the noise remover 130.

In some cases, the optical filter 150 may cover only the second holes 132 of the noise remover 130.

The optical filter 150 transmits light of a particular wavelength range. That is, the optical filter 150 may shield noise light.

When the optical filter 150 covers the first and second holes 131 and 132 of the noise remover 130, it may be possible to prevent noise light from the outside from being incident upon the light receiver 122 and, as such, the light receiver 122 may only receive light reflected from a pointer. Accordingly, it may be possible to accurately recognize motion of the pointer.

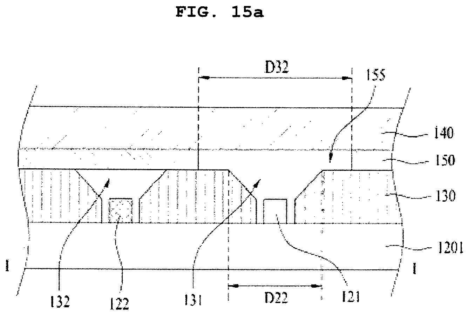

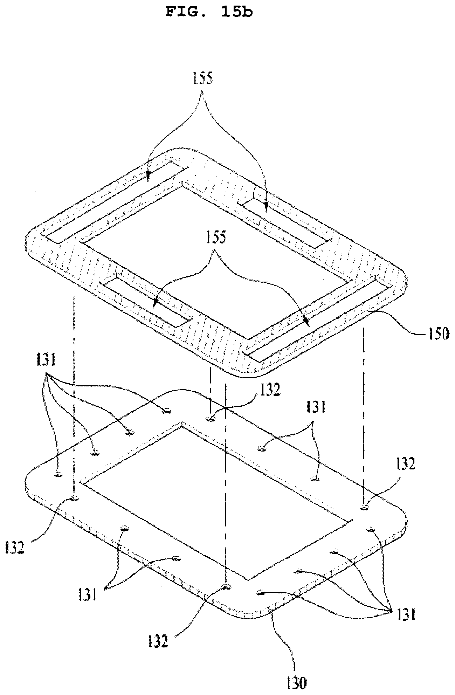

FIGS. 15A and 15B illustrate an example optical filter having holes. FIG. 15A is a sectional view, and FIG. 15B is a perspective view.

As illustrated in FIGS. 15A and 15B, the noise remover 130 may have first holes 131 to expose respective light emitters 121, and second holes 132 to expose respective light receivers 122.

The cover 140 is disposed on the noise remover 130. The cover 140 may cover the first and second holes 131 and 132 of the noise remover 130.

An optical filer 150 may be interposed between the cover 140 and the noise remover 130.

The optical filter 150 may only cover the second holes 132 of the noise remover 130 while allowing the first holes 131 of the noise remover 130 to be exposed.

Accordingly, the optical filter 150 may prevent noise light from being incident upon the light receivers 122 disposed in respective second holes 132.

In addition, the optical filter 150 may have a plurality of third holes 155 to expose respective first holes 131 of the noise remover 130.

In this case, the diameter D32 of each third hole 155 of the optical filter 150 may be greater than the diameter D22 of each first hole 131 of the noise remover 130.

Since the optical filter 150 only covers the second holes 132 of the noise remover 130 while allowing the first holes 131 of the noise remover 130 to be exposed, the light emitters disposed in respective first holes 131 may outwardly diffuse light without loss, and the light receivers 122 disposed in respective second holes 132 may receive noise-removed light. Accordingly, it may be possible to accurately recognize motion of a pointer.

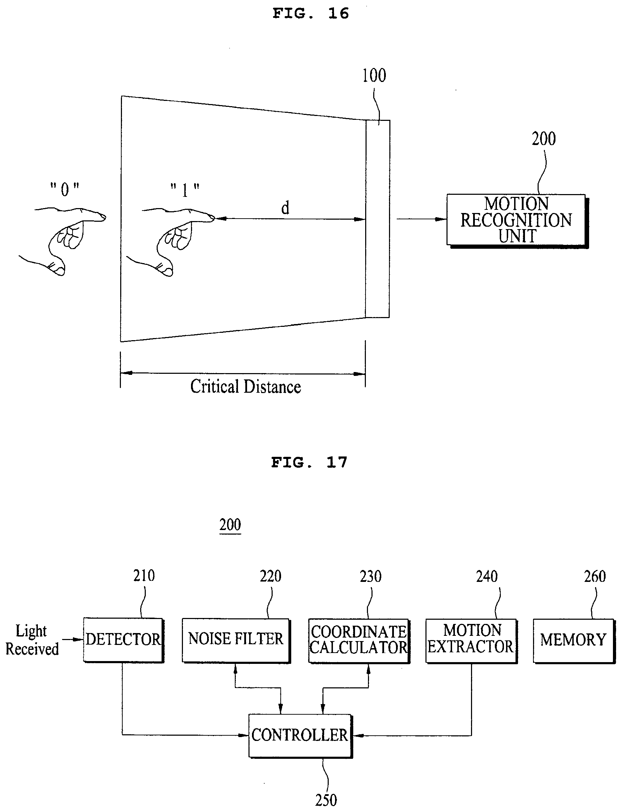

FIG. 16 is a schematic of an example motion recognition unit. FIG. 17 is a block diagram of an example motion recognition unit.

As illustrated in FIGS. 16 and 17, the motion recognition unit 200 may detect an amount of light reflected from a pointer disposed in front of the display unit of the electronic device 100 while being spaced apart from the display unit, may extract motion of the pointer, based on the detected light amount, and may execute an operation corresponding to the extracted motion.

In this case, the motion recognition unit 200 may calculate a distance d between each optical sensor module and the pointer, based on an electrical signal received from the light receiver of the optical sensor module.

Generally, the distance between the optical sensor module and the pointer is inversely proportional to the amount of reflected light measured by the light receiver.

In this regard, the motion recognition unit 200 may utilize the distance between the light emitter, which emits light at a particular time, and the receiver corresponding to the light emitter, upon calculating the distance between each optical sensor module and the pointer at the particular time.

In this case, the motion recognition unit 200 may acquire information as to the distance between each optical sensor module and the pointer at intervals of a predetermined period.

That is, when information as to the distance between each optical sensor module and the pointer is acquired for all optical sensor modules included in the bezel frame in accordance with sequential operations of the optical sensor modules, one information acquisition cycle may be completed.

The motion recognition unit 200 may include a detector 210, a noise filter 220, a coordinate calculator 230, a motion extractor 240, and a controller 250.

The detector 210 may detect, via each light receiver 122, an amount of light reflected from a pointer. The noise filter 220 may remove noise light of a wavelength range other than a predetermined wavelength range, from the detected light amount.

The coordinate calculator 230 may calculate X-coordinates, Y-coordinates, and Z-coordinates of the pointer, based on the noise-removed light amount. The motion extractor 240 may extract a stored pointer motion from a memory 260 in accordance with the coordinates of the pointer.

The controller 350 may control the detector 210, noise filter 220, coordinate calculator 230, and motion extractor 240, and may execute an operation corresponding to the extracted motion.

In some implementations, the noise remover 130 having the first holes 131 to receive respective light emitters 121 and the second holes 132 to receiver respective light receivers 122 is provided to diffuse light emitted from the light emitters 121 and to prevent noise light from being incident upon the light receivers 122 and, as such, it may be possible to provide a wide proximity touch area while minimizing noise.

Accordingly, it may be possible to accurately and precisely extract motion of a pointer even when the pointer motion is slight or is generated at a long range and, as such, an operation corresponding to the extracted motion may be accurately executed.

Thus, an enhancement in reliability of the electronic device may be achieved.

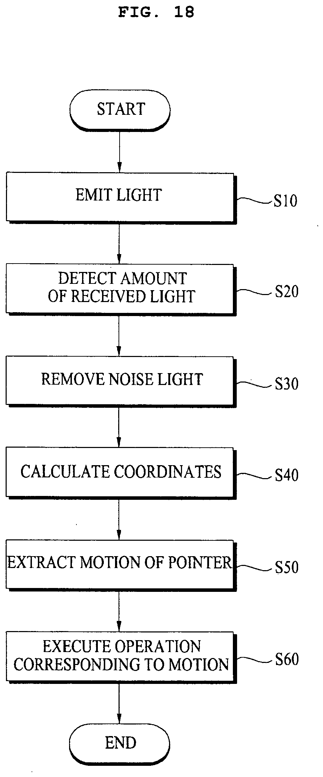

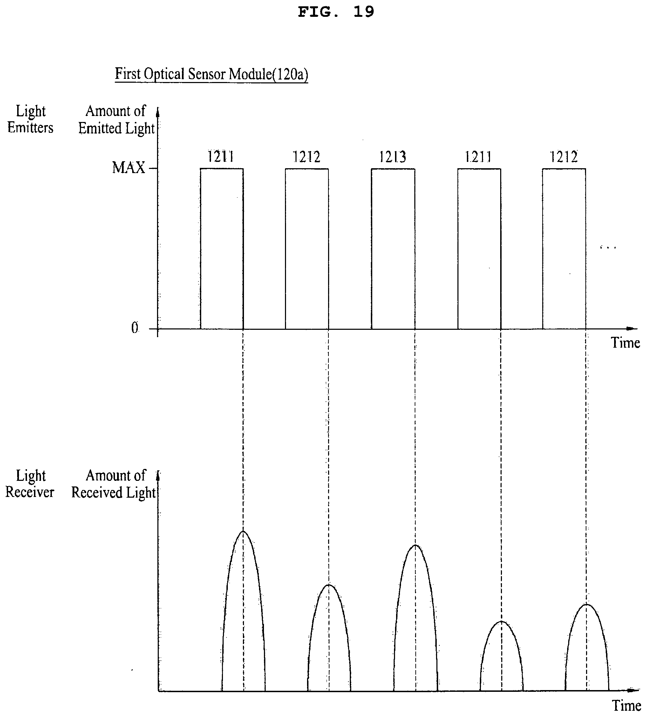

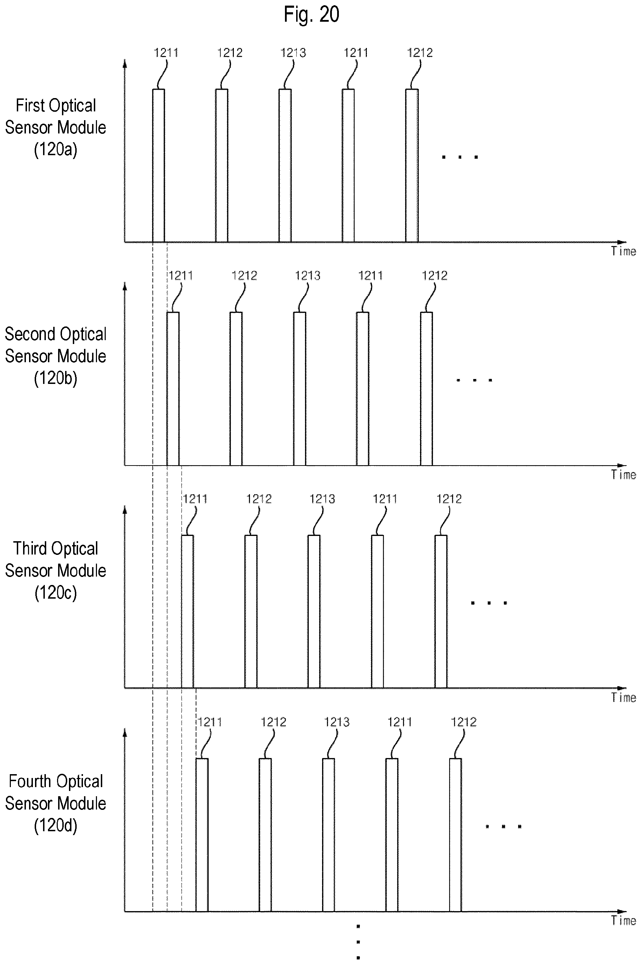

FIG. 18 is a flowchart of a control method of an example electronic device. FIG. 19 is a graph of an operation of an example optical sensor module. FIG. 20 is a graph of an operation of example optical sensor modules.

As illustrated in FIGS. 18 to 20, in accordance with the control method, the electronic device drives at least one light emitter, to emit light (S10).

In some implementations, when the optical sensor modules operate, the light emitters of each optical sensor module may emit light in a sequential manner.

For example, when each optical sensor module, for example, the optical sensor module 120a, includes first, second, and third light emitters 1211, 1212, and 1213, the first, second, and third light emitters 1211, 1212, and 1213 may sequentially emit light at intervals of a predetermined time.

That is, the first light emitter 1211 may first emit light. After a predetermined time, the second light emitter 1212 may emit light. When the predetermined time elapses after light emission from the second light emitter 1212, the third light emitter 1213 may emit light.

When the predetermined time elapses after light emission from the third light emitter 1213, the first light emitter 1211 may again emit light.

The time interval may be previously set by the user. In some implementations, the time interval may be several ten microseconds (µs).

In this case, each of the first to third light emitters 1211 to 1213 may emit light once within several hundred microseconds (µs).

The light emission time intervals of the light emitters in respective optical sensor modules may be equal or different.

In the former case, the light emitters in respective optical sensor modules may emit light at the same time interval. In the latter case, the light emitters in respective optical sensor modules may emit light at different time intervals.

Each light emitter may stop light emission after emitting light, but before the next light emitter emits light.

Thus, each optical sensor module may operate in such a manner that only one light emitter thereof emits light at a particular time, and the remaining light emitters thereof do not emit light at the particular time.

That is, light emission in each optical sensor module at a particular time may be achieved in accordance with light emission of one of the light emitters included in the optical sensor module.

When the plurality of light emitters, namely, the light emitters 1211, 1212, and 1213, emit light at intervals of time, light beams reflected after being emitted from respective light emitters 1211, 1212, and 1213 are incident upon the corresponding light receiver 122 at intervals of a predetermined time.

Whenever light reflected after being emitted from one of the light emitters 1211, 1212, and 1213 is incident upon the light receiver 122, the light receiver 122 may detect an amount of incident light.

Meanwhile, as illustrated in FIG. 20, the optical sensor modules may sequentially operate at intervals of a predetermined time.

Operation of each optical sensor module means that the optical sensor module emits light, and detects light reflected by a pointer. The time interval may be several microseconds (µs).

In detail, as illustrated in FIG. 20, the optical sensor modules 120a, 120b, 120c, and 120d may sequentially operate in a clockwise or counterclockwise direction in accordance with an arrangement order thereof around the display unit 110.

Referring to FIG. 3, the first to fourth the optical sensor modules 120a, 120b, 120c, and 120d may sequentially operate in a clockwise direction from a left upper portion of the rectangular bezel frame 1201 at intervals of a predetermined time.

When a specified one of the optical sensor module operates, the plurality of light emitters included in the specified optical sensor module may emit light in accordance with a predetermined pattern.

When the plurality of light emitters in the specified optical sensor module are set to sequentially emit light at intervals of a predetermined time, light emission may be carried out in a sequential manner, starting from the light emitter, which is set to first emit light in the specified optical sensor module.

When a predetermined time elapses after operation of the specified optical sensor module, another optical sensor module may operate to emit light. Light emission in the latter optical sensor module may also be carried out in a sequential manner, starting from the light emitter, which is set to first emit light in the optical sensor module.

For example, as illustrated in FIG. 20, when a predetermined time elapses after light emission from the first light emitter 1211 of the first optical sensor module 120a, the first light emitter 1211 of the second optical sensor module 120b may emit light.

After the predetermined time elapses again, the first light emitter 1211 of the third optical sensor module 120c may emit light. After the predetermined time elapses again, the first light emitter 1211 of the fourth optical sensor module 120d may emit light. Thus, the first to fourth optical sensor modules 120a to 120d may emit light in a sequential manner at intervals of the predetermined time.

After light emission from the first light emitter 1211 of the first optical sensor module 120a, the second and third light emitters 1212 and 1213 of the first optical sensor module 120a may sequentially emit light, and the light emitters of the second to fourth optical sensor modules 120b to 120d may sequentially emit light.

When the plurality of light emitters included in each optical sensor module are set to sequentially emit light at intervals of a predetermined time, the operation time interval of the optical sensor modules may differ from the light emission time interval of the light emitters.

In some implementations, the operation time interval of the optical sensor modules may be shorter than the light emission time interval of the light emitters.

For example, the operation time interval of the optical sensor modules may be 1/n of the light emission time interval of the light emitters (n being an integer greater than 1 and the number of the optical sensor modules included in the electronic device).

In this case, the optical sensor modules may be set such that, when a specified light emitter included in a specified one of the optical sensor modules emits light, any one of the remaining optical sensor modules does not emit light.

That is, the light emitters of the different optical sensor modules may emit light at different times, respectively.

For example, as illustrated in FIG. 20, when the first light emitter 1211 of the first optical sensor module 120a emits light, any one of the remaining light emitters may not emit light.

Light emission from the second light emitter 1212 of the first optical sensor nodule 120a may be carried out after light emission of the first light emitter 1211 of the fourth optical sensor module 120d. Of course, any one of the remaining light emitters may not emit light at this time.

In some implementations, the plurality of optical sensor modules may operate in a sequential manner at intervals of a predetermined time without operating in a simultaneous manner.

Since only one optical sensor module emits light at a particular time, it may be possible to prevent a phenomenon in which overlapping of light occurs due to simultaneous light emission of the plurality of optical sensor modules and a phenomenon in which light emitted from a specified one of the optical sensor modules is received and detected by another optical sensor module.

As a result, an enhancement in pointer position sensing accuracy may be achieved.

In addition, it may be possible to prevent the controller to be overloaded due to simultaneous operation of the plurality of optical sensor modules.

Meanwhile, the detector 210 of the motion recognition unit 200 may detect an amount of emitted light received by the light receiver after being reflected by a pointer (S20).

The noise filter 220 may then remove, from the detected light amount, noise light of a wavelength range other than a predetermined wavelength range (S30).

Thereafter, the coordinate calculator 230 may calculate X-coordinates, Y-coordinates, and Z-coordinates of the pointer, based on the noise-removed light amount (S40).

The motion extractor 240 may subsequently extract a pointer motion stored in the memory 260 in accordance with the coordinates of the pointer (S50).

The controller may then execute an operation corresponding to the extracted motion (S60).

In some implementations, the noise remover 130 having the first holes 131 to receive respective light emitters 121 and the second holes 132 to receiver respective light receivers 122 is provided to diffuse light emitted from the light emitters 121 and to prevent noise light from being incident upon the light receivers 122 and, as such, it may be possible to provide a wide proximity touch area while minimizing noise.

Accordingly, it may be possible to accurately and precisely extract motion of a pointer even when the pointer motion is slight or is generated at a long range and, as such, an operation corresponding to the extracted motion may be accurately executed. Thus, an enhancement in reliability of the electronic device may be achieved.

## Claims

1. An electronic device (100) having a proximity touch function comprising:
a display unit (110);
a bezel frame (1201) that surrounds the display unit;
a plurality M of optical sensor modules (120, 120a, 120b, 120c, 120d) including a plurality N of light emitters (121, 1211, 1212, 1213) located on the bezel frame and spaced apart from each other and one light receiver (122) located on the bezel frame and spaced apart from the plurality of the light emitters;
a noise remover (130) located on the bezel frame and including a plurality of first holes (131) spaced apart from each other and a plurality of second holes (132) spaced apart from each other;
a cover (140) located on the noise remover; and
a motion recognition unit (200) comprising:
- a detector (210) configured to detect, via the plurality of light receivers, the light reflected from a pointer located away from the display unit;
- a noise filter (220) configured to filter light outside of a predetermined wavelength range from the detected light;
- a coordinate calculator (230) configured to calculate X, Y, and Z-coordinates of the pointer, based on the filtered light;
- a motion extractor (240) configured to determine motion of the pointer, based on the detected light; and
- a controller (250) configured to control the detector, the noise filter, the coordinate calculator, and the motion extractor, and to execute an operation corresponding to the motion of the pointer;
wherein respective light emitters (121) are located in respective first holes (131),
wherein respective light receivers (122) are located in respective second holes (132),
wherein the plurality of light emitters (1211, 1212, 1213) included in each optical sensor module is configured to sequentially emit light at intervals of a predetermined time,
wherein an operation time interval of the optical sensor modules is shorter than the intervals of the predetermined time, and
wherein the plurality of the optical sensor modules is aligned with one another along the periphery of the display unit, and is configured to sequentially operate in a clockwise or counterclockwise direction in accordance with an arrangement order thereof around the display unit,
**characterized in that**
the number N of light emitters per optical sensor module is 3;
in order to prevent a phenomenon in which overlapping of light occurs due to simultaneous light emission of the plurality of optical sensor modules and a phenomenon in which light emitted from a specified one of the optical sensor modules is received and detected by another optical sensor module, only one particular light emitter of one optical sensor module sequentially emits light at each predetermined time interval by:
(a) the first light emitter (1211) of the first optical sensor module (120a) emitting light during a first time interval;
(b) the first light emitter (1211) of the second optical sensor module (120b) emitting light during a second time interval;
(c) the first light emitter (1211) of the third optical sensor module (120c) emitting light during a third time interval;
(d) the first light emitter (1211) of the fourth optical sensor module (120d) emitting light during a fourth time interval;
(e) repeating steps (a) to (d) for a fifth and subsequent time interval for the first light emitter of the fifth and subsequent optical sensor module, until the first light emitter of the M^{th} optical sensor module emits light during the M^{th} time interval;
(f) the second light emitter (1212) of the first to M^{th} optical sensor modules emitting light during each of the (M+1)^{st} to (2M)^{th} time interval; and
(k) the third light emitter (1213) of the first to M^{th} optical sensor modules emitting light during each of the (2M+1)^{st} to (3M)^{th} time interval.

2. The electronic device according to claim 1, wherein:
the plurality of light emitters are spaced apart from each other by a first distance (d1), and
the plurality of light receivers are spaced apart from each other by a second distance (d2).

3. The electronic device according to claim 2, wherein:
- the first distance is less than the second distance.

4. The electronic device according to claim 1, wherein:
- a thickness (d11) of the noise remover around each first hole is greater than a thickness (d12) of the noise remover around each second hole.

5. The electronic device according to claim 1, wherein a diameter (D12, D22) of an upper portion of each first hole and each second hole is greater than a lower portion (D11, D21) of each first hole and each second hole.

6. The electronic device according to claim 1, wherein each first hole and each second hole has an inner surface inclined at a predetermined angle (Θ1, Θ3) with respect to an upper surface (130a) of the noise remover.

7. The electronic device according to claim 1, wherein each first hole and each second hole has an inner surface (131a, 132a) with (i) an upper portion inclined at a predetermined angle (Θ1, Θ3) with respect to an upper surface of the noise remover and (ii) a lower portion perpendicular to a lower surface (130b) of the noise remover.

8. The electronic device according to claim 1, further comprising:
an absorber (137) that is located on an inner surface (131a) of a first hole and that is configured to absorb light from the light emitter, and
an optical filter (136) that is located on the inner surface of the first hole on top of the absorber and that is configured to transmit light of a particular wavelength range.

9. The electronic device according to claim 1, further comprising:
an absorber (137) and an optical filter (136) that are layered over an inner surface (132a) of a second hole;
the optical filter is configured to transmit light of a particular wavelength range, the optical filter being on top of the absorber; and
the absorber is configured to absorb light transmitted from the optical filter.

10. The electronic device according to claim 1, wherein:
the cover covers the plurality of first holes and the plurality of second holes of the noise remover;
a light diffusion material (151) fills a space in a first hole between the cover and a light emitter; and
the light diffusion material includes a plurality of beads (152) configured to refract or reflect light.

11. The electronic device according to claim 1, wherein:
the cover covers the plurality of first holes and the plurality of second holes of the noise remover;
a first portion of the cover facing a first hole has a concave surface (144) concaving in a direction away from the first hole; and
a second portion of the cover facing a second hole has a convex surface (142) convexing in a direction toward the second hole.

12. The electronic device according to claim 1,
wherein a radiation angle of light emitted from each light emitter (1211, 1212, 1213) is varied, respectively, in accordance with the kind of the plurality of light emitters (1211, 1212, 1213).

## Patentansprüche

1. Elektronische Vorrichtung (100) mit einer Annäherungsberührungsfunktion, umfassend:
eine Anzeigeeinheit (110),
einen Einfassungsrahmen (1201), der die Anzeigeeinheit umgibt,
eine Mehrzahl M optischer Sensormodule (120, 120a, 120b, 120c, 120d) mit einer Mehrzahl N Lichtausstrahler (121, 1211, 1212, 1213), die sich auf dem Einfassungsrahmen befinden und voneinander beabstandet sind, und einem Lichtempfänger (122), der sich auf dem Einfassungsrahmen befindet und von der Mehrzahl der Lichtausstrahler beabstandet ist,
einen Störsignalentferner (130), der sich auf dem Einfassungsrahmen befindet und mehrere voneinander beabstandete erste Löcher (131) und mehrere voneinander beabstandete zweite Löcher (132) aufweist,
eine auf dem Störsignalentferner angeordnete Abdeckung (140), und
eine Bewegungserkennungseinheit (200) mit:
- einem Detektor (210), der dazu eingerichtet ist, mittels der Mehrzahl Lichtempfänger das von einem Pointer, der von der Anzeigeeinheit entfernt angeordnet ist, reflektierte Licht zu erfassen,
- einem Störsignalfilter (220), der dazu eingerichtet ist, Licht außerhalb eines vorbestimmten Wellenlängenbereichs aus dem erfassten Licht zu filtern,
- einem Koordinatenrechner (230), der dazu eingerichtet ist, basierend auf dem gefilterten Licht X-, Y- und Z-Koordinaten des Pointers zu berechnen,
- einer Bewegungsextraktionseinrichtung (240), die dazu eingerichtet ist, basierend auf dem erfassten Licht eine Bewegung des Pointers zu ermitteln, und
- einer Steuereinheit (250), die dazu eingerichtet ist, den Detektor, den Störsignalfilter, den Koordinatenrechner und die Bewegungsextraktionseinrichtung zu steuern und eine der Bewegung des Pointers entsprechende Funktion auszuführen, wobei entsprechende Lichtausstrahler (121) in zugehörigen ersten Löchern (131) angeordnet sind,
wobei entsprechende Lichtausstrahler (122) in zugehörigen zweiten Löchern (132) angeordnet sind,
wobei die Mehrzahl Lichtausstrahler (1211, 1212, 1213), die in jedem optischen Sensormodul vorhanden sind, dazu eingerichtet ist, Licht sequentiell in vorbestimmten Zeitintervallen auszustrahlen,
wobei ein Betriebszeitintervall der optischen Sensormodule kürzer ist als die vorbestimmten Zeitintervalle, und
wobei die Mehrzahl der optischen Sensormodule längs des Umfangs der Anzeigeeinheit zueinander ausgerichtet ist und dazu eingerichtet ist, nacheinander in Uhrzeiger- oder Gegenuhrzeigerrichtung entsprechend einer Anordnungsreihenfolge derselben um die Anzeigeeinheit herum zu arbeiten,
**dadurch gekennzeichnet, dass**
die Anzahl N von Lichtausstrahlern pro optischem Sensormodul 3 ist,
um ein Phänomen zu verhindern, bei dem überlappendes Licht aufgrund gleichzeitiger Lichtausstrahlung der Mehrzahl optischer Sensormodule auftritt, und ein Phänomen zu vermeiden, bei dem von einem bestimmten der optischen Sensormodule ausgestrahltes Licht von einem anderen optischen Sensormodul empfangen und erfasst wird, nur ein bestimmter Lichtausstrahler eines optischen Sensormoduls sequentiell Licht in jedem vorbestimmten Zeitintervall ausstrahlt, indem:
(a) der erste Lichtausstrahler (1211) des ersten optischen Sensormoduls (120a) Licht während eines ersten Zeitintervalls ausstrahlt,
(b) der erste Lichtausstrahler (1211) des zweiten optischen Sensormoduls (120b) Licht während eines zweiten Zeitintervalls ausstrahlt,
(c) der erste Lichtausstrahler (1211) des dritten optischen Sensormoduls (120c) Licht während eines dritten Zeitintervalls ausstrahlt,
(d) der erste Lichtausstrahler (1211) des vierten optischen Sensormoduls (120d) Licht während eines vierten Zeitintervalls ausstrahlt,
(e) die Schritte (a) bis (d) für ein fünftes und weiteres Zeitintervall für den ersten Lichtausstrahler des fünften und weiteren optischen Sensormoduls wiederholt werden, bis der erste Lichtausstrahler des M-ten optischen Sensormoduls Licht während des M-ten Zeitintervalls ausstrahlt,
(f) der zweite Lichtausstrahler (1212) des ersten bis M-ten optischen Sensormoduls Licht während jedes des (M+1)-ten bis (2M)-ten Zeitintervalls ausstrahlt, und (k) der dritte Lichtausstrahler (213) des ersten bis M-ten optischen Sensormoduls Licht während jedes des (2M+1)-ten bis (3M)-ten Zeitintervalls ausstrahlt.

2. Elektronische Vorrichtung nach Anspruch 1, bei der:
die Mehrzahl Lichtausstrahler voneinander durch einen ersten Abstand (d1) beabstandet sind, und
die Mehrzahl Lichtempfänger voneinander durch einen zweiten Abstand (d2) beabstandet sind.

3. Elektronische Vorrichtung nach Anspruch 2, bei der:
- der erste Abstand kleiner ist als der zweite Abstand.

4. Elektronische Vorrichtung nach Anspruch 1, bei der:
- eine Dicke (d11) des Störsignalentferners um jedes erste Loch herum größer ist als eine Dicke (d12) des Störsignalentferners um jedes zweite Loch herum.

5. Elektronische Vorrichtung nach Anspruch 1, bei der ein Durchmesser (D12, D22) eines oberen Teils jedes ersten Lochs und jedes zweiten Lochs größer ist als ein unterer Teil (D11, D21) jedes ersten Lochs und jedes zweiten Lochs.

6. Elektronische Vorrichtung nach Anspruch 1, bei der jedes erste Loch und jedes zweite Loch eine Innenfläche aufweist, die unter einem vorbestimmten Winkel (θ1, θ3) bezüglich einer Oberseite (130a) des Störsignalentferners geneigt ist.

7. Elektronische Vorrichtung nach Anspruch 1, bei der jedes erste Loch und jedes zweite Loch eine Innenfläche (131a, 132a) aufweist mit (i) einem oberen Teil, der unter einem vorbestimmten Winkel (θ1, θ3) bezüglich einer Oberseite des Störsignalentferners geneigt ist, und (ii) einem unteren Teil, der rechtwinklig zu einer Unterseite (131b) des Störsignalentferners verläuft.

8. Elektronische Vorrichtung nach Anspruch 1, ferner umfassend:
einen Absorber (137), der auf einer Innenfläche (131a) eines ersten Lochs angeordnet ist und der dazu eingerichtet ist, Licht von dem Lichtausstrahler zu absorbieren, und
einen optischen Filter (136), der an der Innenfläche des ersten Lochs auf dem Absorber angeordnet ist und der dazu eingerichtet ist, Licht eines bestimmten Wellenlängenbereichs zu übertragen.

9. Elektronische Vorrichtung nach Anspruch 1, ferner umfassend:
einen Absorber (137) und einen optischen Filter (136), die geschichtet über einer Innenfläche (132a) eines zweiten Lochs angeordnet sind,
wobei der optische Filter dazu eingerichtet ist, Licht eines bestimmten Wellenlängenbereichs zu übertragen, wobei der optische Filter sich auf dem Absorber befindet, und
wobei der Absorber dazu eingerichtet ist, von dem optischen Filter übertragenes Licht zu absorbieren.

10. Elektronische Vorrichtung nach Anspruch 1, bei der:
die Abdeckung die Mehrzahl erster Löcher und die Mehrzahl zweiter Löcher des Störsignalentferners überdeckt,
ein Lichtdiffusionsmaterial (151) einen Raum in einem ersten Loch zwischen der Abdeckung und einem Lichtausstrahler ausfüllt, und
das Lichtdiffusionsmaterial eine Mehrzahl Perlen (152) beinhaltet, die dazu ausgeführt sind, Licht zu brechen oder zu reflektieren.

11. Elektronische Vorrichtung nach Anspruch 1, bei der:
die Abdeckung die Mehrzahl erster Löcher und die Mehrzahl zweiter Löcher des Störsignalentferners überdeckt,
ein erster Teil der Abdeckung, der einem ersten Loch zugewandt ist, eine konkave Oberfläche (144) hat, die sich konkav in einer Richtung von dem ersten Loch weg wölbt, und
ein zweiter Teil der Abdeckung, der einem zweiten Loch zugewandt ist, eine konvexe Oberfläche (142) hat, die sich konvex in einer Richtung zu dem zweiten Loch hin wölbt.

12. Elektronische Vorrichtung nach Anspruch 1,
bei der ein Ausstrahlungswinkel von Licht, das aus jedem Lichtausstrahler (1211, 1212, 1213) ausgestrahlt wird, sich jeweils entsprechend der Art der Mehrzahl Lichtausstrahler (1211, 1212, 1213) ändert.

## Revendications

1. Dispositif électronique (100) ayant une fonction tactile de proximité comprenant:
une unité d'affichage (110);
un cadre de cadran (1201) qui entoure l'unité d'affichage;
une pluralité M de modules de capteur optique (120, 120a, 120b, 120c, 120d) comprenant une pluralité N de sources lumineuses (121, 1211, 1212, 1213) situées sur le cadre de cadran et espacées les unes des autres et une source lumineuse (122) située sur le cadre de cadran et espacée de la pluralité des sources lumineuses;
un dispositif de suppression de bruit (130) situé sur le cadre de cadran et comprenant une pluralité de premiers trous (131) espacés les uns des autres et une pluralité de seconds trous (132) espacés les uns des autres;
un couvercle (140) situé sur le dispositif de suppression de bruit; et
une unité de reconnaissance de mouvement (200) comprenant:
- un détecteur (210) conçu pour détecter, par l'intermédiaire de la pluralité de sources lumineuses, la lumière réfléchie par un pointeur situé à l'écart de l'unité d'affichage;
- un filtre de bruit (220) conçu pour filtre la lumière en dehors d'une plage de longueurs d'ondes prédéfinies à partir de la lumière détectée;
- un calculateur de coordonnées (230) conçu pour calculer les coordonnées X, Y et Z du pointeur, en fonction de la lumière filtrée;
- un extracteur de mouvement (240) conçu pour déterminer le mouvement du pointeur en fonction de la lumière détectée; et
- un organe de commande (250) conçu pour commander le détecteur, le filtre de bruit, le calculateur de coordonnées, et l'extracteur de mouvement, et pour exécuter une opération correspondant au mouvement du pointeur;
les sources lumineuses respectives (121) étant situées dans des premiers trous respectifs (131),
les récepteurs de lumière respectifs (122) étant situés dans des seconds trous respectifs (132),
la pluralité des sources lumineuses (1211, 1212, 1213) comprises dans chaque module de capteur optique étant conçue pour émettre de la lumière séquentiellement à des intervalles d'une durée prédéfinie,
un intervalle de temps de fonctionnement des modules de capteur optique étant inférieur aux intervalles d'une durée prédéfinie, et
la pluralité des modules de capteur optique étant alignée les uns avec les autres le long de la périphérie de l'unité d'affichage, et étant conçue pour fonctionner séquentiellement dans le sens horaire ou dans le sens antihoraire en fonction de leur ordre de disposition autour de l'unité d'affichage,
**caractérisé en ce que**
le nombre N de sources lumineuses par module de capteur optique est 3; afin d'éviter un phénomène de chevauchement de lumière dû à l'émission simultanée de lumière de la pluralité des modules de capteur optique et un phénomène dans lequel la lumière émise à partir d'un module spécifique parmi les modules de capteur optique est reçue et détectée par un autre module de capteur optique, seule une source de lumière en particulier d'un module de capteur optique émet séquentiellement la lumière à chaque intervalle d'une durée prédéfinie par:
(a) la première source lumineuse (1211) du premier module de capteur optique (120a) émettant de la lumière pendant un premier intervalle temporel;
(b) la première source lumineuse (1211) du deuxième module de capteur optique (120b) émettant de la lumière pendant un deuxième intervalle temporel;
(c) la première source lumineuse (1211) du troisième module de capteur optique (120c) émettant de la lumière pendant un troisième intervalle temporel;
(d) la première source lumineuse (1211) du quatrième module de capteur optique (120a) émettant de la lumière pendant un quatrième intervalle temporel;
(e) répéter les étapes (a) à (d) pour un cinquième intervalle temporel subséquent pour la première source lumineuse du cinquième module de capteur optique subséquent, jusqu'à ce que la première source lumineuse du M-ième module de capteur optique émette la lumière pendant le M-ième intervalle temporel;
(f) la seconde source lumineuse (1212) du premier au M-ième modules de capteur optique émettant la lumière pendant chacun du (M + 1)-er au (2M)-ième intervalle temporel; et
(k) la troisième source lumineuse (1213) du premier au M-ième modules de capteur optique émettant la lumière pendant chacun du (2M+1)-er au (3M)-ième intervalle temporel.

2. Dispositif électronique selon la revendication 1, dans lequel:
la pluralité des sources lumineuses sont espacées les unes des autres d'une première distance (d1), et
la pluralité des récepteurs de lumière sont espacés les uns des autres d'une distance (d2).

3. Dispositif électronique selon la revendication 2, dans lequel:
- la première distance est inférieure à la seconde distance.

4. Dispositif électronique selon la revendication 1, dans lequel:
- une épaisseur (d11) du dispositif de suppression de bruit autour de chaque premier trou est supérieure à une épaisseur (d12) du dispositif de suppression de bruit autour de chaque second trou.

5. Dispositif électronique selon la revendication 1, dans lequel un diamètre (D12, D22) d'une partie supérieure de chaque premier trou et de chaque second trou est supérieur à une partie inférieure (D11, D21) de chaque premier trou et de chaque second trou.

6. Dispositif électronique selon la revendication 1, dans lequel chaque premier trou et chaque second trou a une surface intérieure (131a, 132a) dont (i) une partie supérieure est inclinée selon un angle prédéfini (θ1, θ3) par rapport à une surface supérieure (130a) du dispositif de suppression de bruit.

7. Dispositif électronique selon la revendication 1, dans lequel chaque premier trou et chaque second trou ont une surface intérieure (131a 132a) dont (i) une partie supérieure est inclinée selon un angle prédéfini (θ1, θ3) par rapport à une surface supérieure du dispositif de suppression de bruit et dont (ii) une partie inférieure est perpendiculaire à une surface inférieure (130b) du dispositif de suppression de bruit.

8. Dispositif électronique selon la revendication 1, comprenant en outre:
un absorbeur (137) qui est situé sur une surface intérieure (131a) d'un premier trou et qui est conçu pour absorber la lumière provenant de la source lumineuse, et
un filtre optique (136) qui est situé sur la surface intérieure du premier trou sur la partie supérieure de l'absorbeur et qui est conçu pour transmettre la lumière ayant une plage de longueur d'onde spécifique.

9. Dispositif électronique selon la revendication 1, comprenant en outre:
un absorbeur (137) et un filtre optique (136) qui sont empilés sur une surface intérieure (132a) d'un second trou;
le filtre optique est conçu pour transmettre la lumière d'une plage de longueur d'onde spécifique, le filtre optique étant sur la partie supérieure de l'absorbeur; et
l'absorbeur est conçu pour absorber la lumière transmise par le filtre optique.

10. Dispositif électronique selon la revendication 1, dans lequel:
le couvercle recouvre la pluralité des premiers trous et la pluralité des seconds trous du dispositif de suppression de bruit;
un matériau de diffusion de lumière (151) remplit l'espace dans un premier trou entre le couvercle et la source lumineuse; et
le matériau de diffusion de lumière comprend une pluralité de billes (152) conçues pour réfracter ou réfléchir la lumière.

11. Dispositif électronique selon la revendication 1, dans lequel:
le couvercle recouvre la pluralité de premiers trous et la pluralité des seconds trous du dispositif de suppression de bruit;
une première partie du couvercle faisant face à un premier trou ayant une surface concave (144) étant concave dans une direction s'éloignant du premier trou; et
une seconde partie du couvercle faisant face à un second trou a une surface convexe (142) étant convexe dans une direction vers le second trou.

12. Dispositif électronique selon la revendication 1, dans lequel un angle de rayonnement de la lumière émise par chaque source lumineuse (1211, 1212, 1213) varie, respectivement, en fonction du type de la pluralité des sources lumineuses (1211, 1212, 1213).
